(19) Europäisches Patentamt / European Patent Office / Office européen des brevets

(11) **EP 2 461 166 B1**

(12) **FASCICULE DE BREVET EUROPEEN**

(45) Date de publication et mention de la délivrance du brevet:
**08.04.2015 Bulletin 2015/15**

(51) Int Cl.:
*G01P 3/36* *(2006.01)*     *G01S 11/10* *(2006.01)*

(21) Numéro de dépôt: **11191125.1**

(22) Date de dépôt: **29.11.2011**

(54) **Systeme de mesure de la vitesse radiale d'un mobile**

System zum Messen der Radialgeschwindigkeit eines Mobilgeräts

System for measuring the radial velocity of a mobile device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2010 FR 1004719**

(43) Date de publication de la demande:
**06.06.2012 Bulletin 2012/23**

(73) Titulaire: **Thales**
**92200 Neuilly Sur Seine (FR)**

(72) Inventeurs:
• **Garrec, Patrick**
  **33700 Merignac (FR)**
• **Cornic, Pascal**
  **29820 Guilers (FR)**
• **Kemkemian, Stéphane**
  **75014 Paris (FR)**

(74) Mandataire: **Collet, Alain et al**
**Marks & Clerk France**
**Conseils en Propriété Industrielle**
**Immeuble Visium**
**22, Avenue Aristide Briand**
**94117 Arcueil Cedex (FR)**

(56) Documents cités:
DE-C- 767 455     US-A- 3 409 369
US-A- 4 301 455     US-A- 4 442 432

• MORVAN L ET AL: "High resolution range measurement using lidar-radar concept", MICROWAVE PHOTONICS, 2004. MWP'04. 2004 IEEE INTERNATIONAL TOPICAL MEE TING ON OGUNQUIT, ME, USA 4-6 OCT. 2004, PISCATAWAY, NJ, USA,IEEE, US, 4 octobre 2004 (2004-10-04), pages 131-133, XP010771540, DOI: 10.1109/MWP.2004.1396854 ISBN: 978-0-7803-8491-0

**Description**

Le domaine de l'invention concerne un système de mesure de la vitesse radiale d'un mobile. L'invention s'applique par exemple à un système de détection de mouvement d'un mobile, à un système de guidage d'un mobile et un système d'appontage ou d'atterrissage d'un aéronef et plus généralement de deux mobiles.

Habituellement, les systèmes de détection de mouvement de mobile, notamment pour les systèmes radar automobiles ou aériens, exploitent l'effet Doppler pour déterminer la vitesse de déplacement d'un mobile. Les systèmes radars comprennent un émetteur d'un signal radiofréquence et un récepteur du signal radiofréquence. Une fois le signal émis par l'émetteur en direction du mobile en mouvement celui-ci est réfléchi puis capté par le récepteur comme par exemple décrit dans les documents DE 676 455 C et US 3,409,369. La détermination de la vitesse du mobile est basée sur le fait que la fréquence du signal capté varie en fonction de la vitesse radiale par rapport au porteur. Dans un référentiel galiléen, le référentiel du milieu dans lequel se propage l'onde (par exemple l'atmosphère pour des radars), si l'on considère comme convention, les vitesses positives dans la direction de propagation du signal émis, on désigne par $F_{emetteur}$ la fréquence émise par l'émetteur et $F_{recepteur}$ la fréquence reçue par le récepteur, nous obtenons :

$$F_{recepteur}= (C-V_{recepteur})/(C-V_{emetteur})*F_{emetteur}$$

$$\text{Soit } F_{doppler} = (V_{recepteur}-V_{emetteur})/C*F_{emetteur}$$

Avec :

$$F_{doppler} = F_{emetteur}-F_{recepteur}$$

$V_{emetteur}$, la vitesse radiale de l'émetteur, $V_{recepteur}$, la vitesse radiale du récepteur, et C la vitesse de la lumière.

Lorsque l'émetteur est situé sur le mobile, la mesure directe de la vitesse relative d'un mobile sur une seule fréquence n'est pas possible puisqu'elle nécessite deux oscillateurs parfaitement cohérents en phase, l'un au niveau de l'émetteur et l'autre au niveau du récepteur. Cette mesure nécessiterait également un écart de fréquence parfaitement constant et connu entre l'oscillateur de l'émetteur et l'oscillateur du récepteur.

La mesure de la vitesse d'un mobile est un point important en asservissement. Les contraintes mécaniques apportées par les vibrations et chocs des mobiles sur la stabilité des fréquences des balises les équipant sont importantes, enchérissant ainsi le coût de l'électronique embarquée voir prohibant l'emploi de cette solution sur des applications bon marché. Ainsi, un problème des solutions de l'état de la technique réside dans la difficulté de maîtriser la stabilité et la pureté de l'onde émise en fonction de l'environnement (température, vibrations, modulation d'alimentation ...).

Selon l'état de la technique, il existe différentes façons de calculer les positions angulaires en azimut et en élévation. Dans le cas d'un aéronef comportant une boule optronique équipée d'antennes, il est possible de connaître ces données à partir des pesées goniométriques et des interféromètres. Les pesées goniométriques manquent de précision et demandent des étalonnages précis, tandis que les interféromètres sont coûteux et mettent en oeuvre une électronique compliquée.

Il est également possible d'installer un radar à proximité du départ du mobile pour effectuer les mesures avec les problèmes de discrétion et de brouillage connus, le radar étant par nécessité pointé vers l'objectif.

Un premier objectif de l'invention est l'amélioration de la précision de mesure de vitesse et de positionnement du mobile.

Un second objectif de l'invention est de proposer une solution à bas coût de système de mesure de la vitesse radiale d'un mobile par rapport à un point référentiel.

Plus précisément, l'invention est un système de mesure de la vitesse radiale d'un mobile dans une ligne de visée déterminée par rapport à une position référentielle comprenant une balise émetteur d'un signal et un ensemble récepteur référentiel dédié à la réception dudit signal.

La balise émetteur est apte à émettre un signal sur au moins deux fréquences d'émission, les dites fréquences d'émission étant séparées d'un écart fréquentiel d'émission choisi, et le système de mesure comporte en outre un moyen d'analyse du signal reçu par l'ensemble récepteur, le dit moyen d'analyse étant apte à recevoir les fréquences de réception du signal bi fréquence, une fréquence de réception étant la fonction d'une fréquence d'émission affectée de l'effet doppler lié au déplacement du mobile, et à mesurer l'écart fréquentiel de réception séparant les dites fréquences de réception du signal pour calculer la vitesse radiale du mobile selon une fonction dudit écart fréquentiel de réception et de l'écart fréquentiel d'émission. Selon l'invention, la balise émetteur est disposé sur un premier des éléments d'un groupe formé par le mobile (10) et la position référentielle (3). L'ensemble récepteur (2) est disposé sur un second des éléments du groupe.

L'invention présente un autre avantage important par rapport à l'utilisation d'un radar utilisé pour mesurer la vitesse radiale d'un mobile. Dans un système radar l'ensemble émetteur et l'ensemble récepteur sont disposés tous deux à la position référentielle ou à proximité immédiate de celle-ci. Le radar nécessite un trajet aller et retour de l'onde électromagnétique avec réflexion sur le mobile. Au contraire, le fait de séparer l'ensemble récepteur et l'ensemble émetteur, l'un disposé à la position référentielle et l'autre disposé sur le mobile permet de ne mettre en oeuvre qu'un seul trajet au lieu de deux dans le cas du radar.

De plus, la mise en oeuvre d'une mesure bi fréquence permet de se passer d'une base de temps commune à l'ensemble émetteur et à l'ensemble récepteur. En effet, même en cas de perturbation subie par l'ensemble émetteur, les deux fréquences émises sont perturbées de la même façon ce qui n'affecte pas l'écart fréquentiel utilisée pour la mesure de vitesse radiale. Parmi les perturbations, on peut par exemple citer celle dues à des contraintes mécaniques importantes dues à un lancement à grande vitesse du mobile. Ce type de contrainte générant de fortes accélérations peut perturber un oscillateur utilisé pour générer les fréquences d'émission. Avantageusement, le système ne comprend qu'un seul oscillateur pour générer les deux fréquences d'émission. Une des fréquences peut être directement issue de l'oscillateur et l'autre fréquence issue d'une division de la fréquence de l'oscillateur.

Selon un mode de réalisation, la balise émetteur est apte à émettre au moins deux signaux simultanément, un premier signal étant émis sur une première fréquence d'émission et le second signal étant émis sur une deuxième fréquence d'émission.

Selon un second mode de réalisation, la balise émetteur est apte à émettre un signal de localisation sur deux fréquences émises alternativement.

L'invention s'applique par exemple à un système de guidage d'un mobile comprenant un système de mesure de la vitesse radiale du mobile selon l'invention. Avantageusement, l'ensemble récepteur comporte au moins deux capteurs radiofréquences, et il comporte en outre une boule optronique située entre les dits capteurs pour asservir la position du mobile par comparaison de la mesure des vitesses radiales sur les dits capteurs.

L'invention peut également s'appliquer à un système d'aide à l'appontage ou l'atterrissage pour un aéronef comprenant au moins un système de mesure de la vitesse radiale du mobile. Pour ce système d'aide un art antérieur est constitué par le document US 4,301,455.

L'invention s'applique également à un système de détection de basse vitesse dans un fouillis de sol.

De Préférence, pour un système d'appontage ou d'atterrissage pour un aéronef l'ensemble récepteur comprend deux capteurs radiofréquences séparés d'une distance choisie. Et plus généralement pour tout système de contrôle de trajectographie.

L'invention présente l'avantage d'être peu coûteuse au regard des solutions de l'état de la technique car la simplicité des fonctions réalisées par le récepteur, l'émetteur et les moyens de calcul permet d'exploiter des moyens techniques à bas coût.

En outre, l'utilisation d'une solution passive de réception des informations, au contraire d'une solution radar selon l'état de la technique pour mesurer la vitesse Doppler, permet d'implémenter le système sur des porteurs discrets sans dégradations notable de la discrétion.

De plus, l'invention est insensible aux fluctuations thermiques de la porteuse.

De plus, de faibles puissances de signal sont suffisantes pour réaliser les mesures en réception.

L'invention sera mieux comprise et d'autres avantages apparaîtront à la lecture de la description qui va suivre donnée à titre non limitatif et grâce aux figures annexées parmi lesquelles :

La figure 1 représente un schéma fonctionnel d'un système composé de deux mobiles selon un premier mode de réalisation.

La figure 2 représente un schéma fonctionnel d'un système composé de deux mobiles selon un second mode de réalisation.

La figure 3 représente un schéma fonctionnel d'un système composé de deux mobiles selon un troisième mode de réalisation

La figure 4 représente un schéma d'un premier mode de réalisation d'une architecture fonctionnelle d'un émetteur selon l'invention.

La figure 5 représente un schéma d'un second mode de réalisation d'une architecture fonctionnelle d'un émetteur selon l'invention.

La figure 6 représente un schéma d'un troisième mode de réalisation d'une architecture fonctionnelle d'un émetteur selon l'invention.

La figure 7 représente un schéma d'un premier mode de réalisation d'une architecture fonctionnelle d'un récepteur selon l'invention.

La figure 8 représente un schéma d'un second mode de réalisation d'une architecture fonctionnelle d'un récepteur selon l'invention.

L'invention est un système de mesure de la vitesse radiale d'un mobile à partir de fréquence Doppler. Elle permet également de mesurer la position du mobile à partir de l'information de position initiale. Pour obtenir le paramètre de vitesse radiale, l'invention exploite la mesure Doppler d'un écart fréquentiel pour un signal émis à partir du mobile. La mesure de l'écart fréquentiel offre l'avantage de s'affranchir des erreurs de génération de variation de la fréquence de l'émetteur. Par l'écart des fréquences habillé du Doppler, il est possible de calculer la vitesse relative d'un mobile par rapport à une position référentielle, immobile ou mobile, sans que le calcul soit dépendant des drifts d'origine thermique ou de quelle qu'autre origine. En effet, le calcul de la vitesse radiale du mobile est exécuté à partir des données de la différence de fréquence et non de la fréquence absolue.

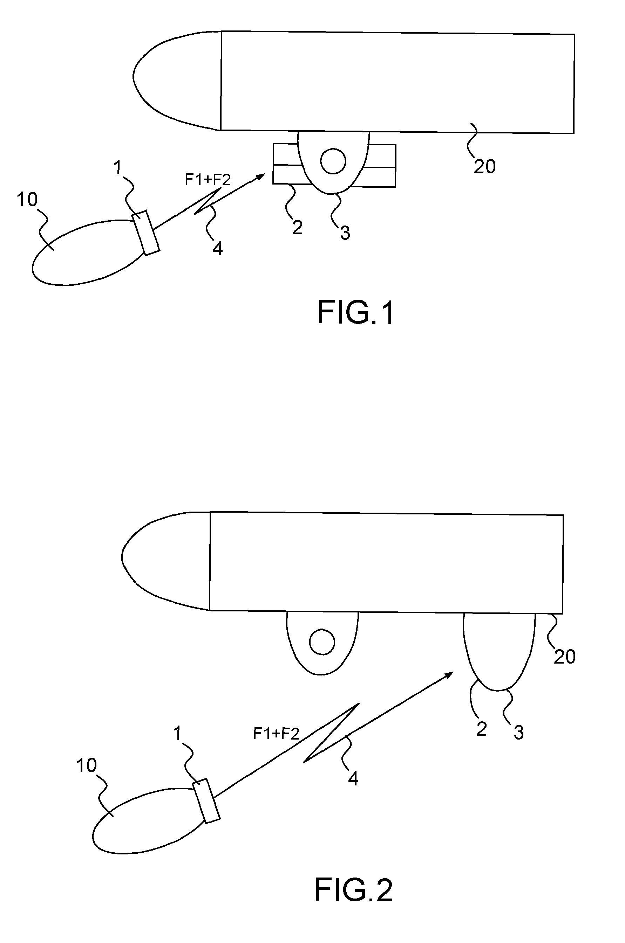

Comme représenté sur les figures 1 à 2, le système de mesure de la vitesse radiale d'un mobile selon l'invention comprend un ensemble émetteur 1, un ensemble récepteur référentiel 2 et un moyen d'analyse d'un signal non représenté.

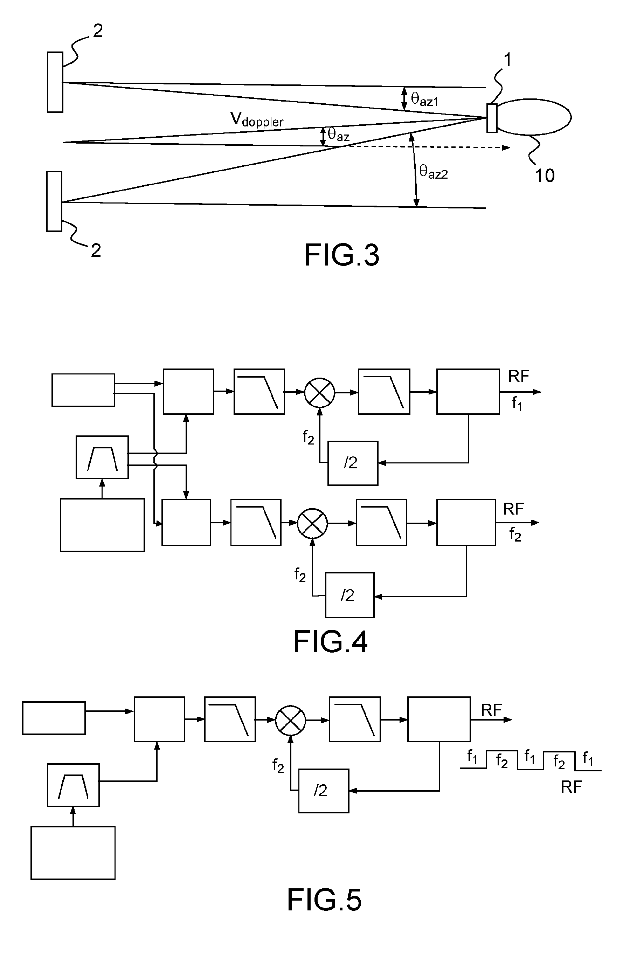

Selon une caractéristique essentielle de l'invention, l'ensemble émetteur est apte à émettre un signal 4 sur au moins deux fréquences d'émission $F1_{emission}$ et $F2_{emission}$, les dites fréquences d'émission étant séparées d'un écart fréquentiel d'émission choisi. L'ensemble émetteur comprend des éléments rayonnants adaptés pour transmettre un signal sur une ou plusieurs fréquences émises successivement sur le même signal, ou plusieurs signaux sur une ou plusieurs fréquences également. On nomme fréquence d'émission ou $F_{emission}$ la fréquence du signal émis par l'ensemble émetteur. L'ensemble émetteur 1 comprend également des moyens électroniques de génération d'un signal. Des exemples de moyens électroniques de génération d'un signal adaptés à l'invention sont décrits plus précisément dans la suite de la description au moyen des figures 3 et 4. Par exemple, un mode de réalisation pour la génération de deux fréquences espacées d'une valeur connue peut être un générateur de fréquence à synthèse numérique directe (DDS pour Direct Digital Synthesis en langage anglo-saxon).

Selon une caractéristique de l'invention, l'ensemble récepteur référentiel 2 est dédié à la réception dudit signal 4. L'ensemble récepteur comprend des éléments rayonnants adaptés pour capter un signal sur une ou plusieurs fréquences successives sur le même signal, ou plusieurs signaux sur une ou plusieurs fréquences également. On nomme fréquence de réception ou $F_{reception}$ la fréquence du signal capté, soit pour deux fréquences $F1_{reception}$ et $F2_{reception}$. Par ailleurs, une fréquence de réception est la fonction d'une fréquence d'émission affectée de l'effet doppler lié au déplacement du mobile.

En outre, l'ensemble récepteur comprend des moyens électroniques et radiofréquences pour extraire du signal capté des données d'information relatives au déplacement du mobile, notamment l'écart entre les fréquences de réception du signal permettant de déduire la vitesse radiale du mobile dans le référentiel. Des exemples de moyens électroniques d'extraction d'information du signal adaptés à l'invention sont décrits plus précisément dans la suite de la description au moyen des figures 5, 6 et 7. Par exemple, un écart de fréquence peut être mesuré à partir d'un oscillateur basse fréquence par exemple à quartz qui alimente un mélangeur avec une porteuse.

Selon l'invention, le moyen d'analyse d'un signal comprend les moyens électroniques de calcul permettant de calculer l'écart de fréquence entre deux ou plusieurs fréquences de réception captées par l'ensemble récepteur 2. La différence entre deux fréquences de réception $F1_{réception}$ et $F2_{reception}$ est égale à :

$$\text{Delta} \quad F_{reception} = (C-V_{recepteur})/(C-V_{emetteur}) * ((F2_{emission} + \text{Drift}) - (F1_{emission} + \text{Drift})) = (C-V_{recepteur}) / (C-V_{emetteur}) * (F2_{emission} - F1_{emission})$$

Avec $V_{recepteur}$ pour la vitesse du récepteur, soit la vitesse de la position référentielle, et $V_{emetteur}$ pour la vitesse de l'émetteur soit du mobile.

Le Drift est le biais introduit par les changements thermiques et de pression de l'environnement et les vibrations sur l'électronique.

La vitesse du récepteur et la différence entre les deux fréquences d'émission étant connue, le moyen d'analyse calcule la vitesse de l'émetteur sans l'impact des perturbations extérieures. De plus, ce calcul s'affranchit des erreurs de génération et de variation de la fréquence de l'émetteur. Préférentiellement, à l'émission on choisit un écart entre les fréquences $F2_{emission}$ et $F1_{emission}$ élevé de sorte que la valeur à mesurer soit plus facilement détectable du fait que l'écart de fréquence à la réception entre $F2_{reception}$ et $F1_{reception}$ sera également élevé.

La figure 1 représente un premier mode d'application de l'invention concernant un système de suivi ou de détection de déplacement d'un mobile 10. Le mobile 10 comprend une balise bi fréquence 1 embarquée à l'arrière du mobile 10. Ainsi la discrétion et la difficulté de brouillage sont plus importantes, malgré les puissances mises en jeu minimes (de l'ordre de quelques milliwatts). Il est possible d'équiper des éléments mobiles projetés ou largués de ce système d'émission simplifié.

L'aéronef 20 ou un équipement 3 solidaire de l'aéronef est équipé d'un ensemble récepteur 2 adapté pour capter le signal 4 bi fréquences émis par la balise 1. De même, le récepteur est constitué d'électronique simple. Grâce à ce système de mesure simplifié et à bas coût, la mesure de la vitesse d'un mobile projeté ou largué peut facilement se démocratiser.

Pour une application de système de guidage d'un mobile 10, il est possible de mesurer la vitesse de rotation du mobile à partir de la mesure de la polarisation du signal par exemple par de la modulation d'amplitude. La vitesse de rotation est obtenue par la mesure de l'effet de désadaptation lié au changement de polarisation quand le mobile est en rotation.

D'autres modes d'applications sont possibles. Par exemple, comme illustré par la figure 1, le système de mesure peut s'étendre au cas d'un aéronef ou d'un lanceur au sol. Il est possible d'installer des capteurs de part et d'autre d'une boule optronique 3 et d'utiliser la balise 1 qui est installée à l'arrière du mobile 10 pour connaître la position et la vitesse relative du mobile pendant leur trajectoire. La distance radiale est connue par l'intégration temporelle de la vitesse, la position à l'origine étant connue. Les positions angulaires en azimut et en élévation par rapport à la boule optronique 3 (ou position référentielle), située au centre des antennes peuvent être connues. En mesurant l'écart entre deux fréquences, et par conséquent la vitesse Doppler, il est possible d'asservir la position du mobile de façon à ce que les mesures soient identiques sur les différentes antennes. Ceci s'explique par le fait qu'il s'agit de la vitesse Doppler sur l'axe de visée (ou axe radial) à l'antenne qui est mesurée.

La figure 2 représente un second mode de réalisation. L'aéronef ou le lanceur 20 est équipé d'un radar. Ainsi il est possible d'asservir la position de la boule radar sur la boule optronique et de mettre en place un système de guidage autonome du mobile 10.

La figure 3 représente un troisième mode de réalisation de l'invention pour un système d'appontage ou d'atterrissage d'un aéronef. L'utilisation de la différence de la mesure Doppler pour des capteurs d'appontage par mesure d'au moins deux capteurs au sol permet une mesure d'écart angulaire et donc un guidage, en particulier en azimut, en comparant le doppler reçu sur chacun des capteurs, sans avoir recours à une technique de récepteurs et d'antennes sophistiquées. La projection de la vitesse Doppler sur chacune des voies de réception 2 est mesurée.

Selon cette application, l'ensemble récepteur comprend deux capteurs 2 et le mobile embarque un ensemble émetteur 1. Le principe consiste à mesurer une erreur angulaire $\theta_{az}$ équivalente à $(\theta_{az2} - \theta_{az1})/2$. Le premier capteur mesure $\cos(\theta_{az1})*V_{Doppler}$ et le second capteur mesure $\cos(\theta_{az2})*V_{Doppler}$. Cette opération peut être réalisée dans l'axe en azimut et en élévation.

Sur les figures 1 et 2, l'ensemble émetteur 1 est disposé sur le mobile 10 et l'ensemble récepteur 2 sur un aéronef 20 formant la position référentielle. Il est bien entendu possible d'inverser l'ensemble émetteur 1 et l'ensemble récepteur 2, comme par exemple dans le cas où le système est mis en oeuvre pour l'appontage ou l'atterrissage de l'aéronef 20. Dans ce cas, on dispose sur la piste d'atterrissage où à proximité de celle-ci un ensemble émetteur 1. De façon plus générale, la notion de vitesse est relative entre deux éléments, l'un portant arbitrairement le nom de mobile et l'autre de position référentielle. Ces deux appellations peuvent être inversées sans pour autant sortir du cadre de l'invention.

Selon une autre application de l'invention, le système permet de mesurer la vitesse de cibles faiblement mobiles, particulièrement lorsque le fouillis environnant à peu ou prou la même vitesse que la cible. L'utilisation d'une balise bi fréquence permet de détecter les vitesses des objets lentement mobiles sans être pénalisé par la fausse alarme liée au fouillis environnant. Une utilisation dans les drones ou dans toute plate-forme mobile, notamment lors des phases dites de roulage permet d'améliorer leur pistage dans des conditions particulièrement difficile de mesure en angle rasant.

La figure 4 représente un premier mode de réalisation d'émetteur pour le système selon l'invention. La génération des deux fréquences de l'ensemble émetteur est réalisée à partir de deux générateurs DDS alimentés par un même circuit FPGA (« Field Programmable Gate Array » en anglais). Un oscillateur TCXO fournit un signal filtré en entrée de chaque générateur DDS. En sortie de chaque générateur DDS est présent un filtre de fréquence et une boucle d'asservissement calée sur une fréquence f1 et f2 comprenant un mélangeur, un filtre de fréquence et un oscillateur VCO. Ainsi, deux signaux RF ayant une fréquence f1 pour un premier signal et une fréquence f2 pour un second signal sont générés.

La figure 5 représente un second mode de réalisation d'émetteur pour le système selon l'invention. Cette solution alternative consiste à émettre sur un même signal séquentiellement deux fréquences $F1_{emission}$ et $F2_{emission}$ avec le même générateur.

D'autres solutions alternatives d'émetteurs sont possibles. Un générateur de signal hyperfréquence conçu à base de diodes gun peut être implémenté. Une telle solution présente un faible coût de réalisation. Malgré la faible stabilité en fréquence d'une telle solution de génération de signal, les performances du système ne sont pas impactées car l'invention se base sur l'analyse des écarts de fréquence et non la fréquence absolue.

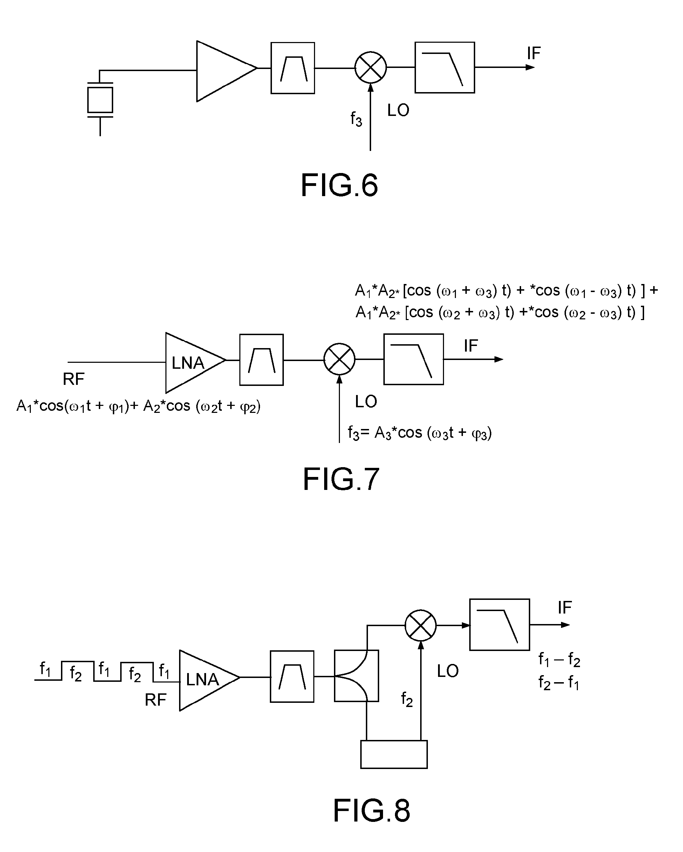

Les figures 6 à 8 illustrent les solutions techniques de récepteurs pouvant être implémentées dans le cadre de l'invention. Ces figures schématisent différentes solutions connues de l'état de la technique pour obtenir l'information de l'écart de fréquence doppler à partir de un ou plusieurs signaux captés. La figure 6 représente une architecture analogique comprenant un mélangeur. La figure 7 représente une architecture numérique comprenant notamment un convertisseur analogique numérique LNA et un mélangeur. D'autres solutions de mesure de fréquence sont possibles et à titre d'exemple on peut citer la détection de passage par zéro après écrêtage et saturation, codage rapide sur 1 bit et comparaison par rapport à un compteur.

Dans le cas d'un ensemble émetteur transmettant un alterna de fréquence sur un même signal, avec un rythme de 50% par exemple, la figure 8 représente un récepteur adapté. Selon cette solution, le récepteur comprend une ligne à retard DL dans la chaîne du mélangeur. Si le signal reçu est injecté sur les deux voies du mélangeur, l'écart de fréquence est obtenu en filtrant les harmoniques au moyen d'un filtre passe-bas. Cette solution est peu onéreuse et ne met pas en oeuvre un oscillateur dans la réception.

## Revendications

1. Système de mesure de la vitesse radiale d'un mobile (10) dans une ligne de visée déterminée par rapport à une position référentielle (3) comprenant une balise émetteur (1) d'un signal (4) et un ensemble récepteur (2) référentiel dédié à la réception dudit signal (4), dans lequel :

   - La balise émetteur (1) est disposé sur un premier des éléments d'un groupe formé par le mobile (10) et la position référentielle (3), et
   - L'ensemble récepteur (2) est disposé sur un second des éléments du groupe, , . ,

   **caractérisé en ce que** :

   - La balise émetteur (1) est apte à émettre un signal (4) sur au moins deux fréquences d'émission ($F_1$, $F_2$), les dites fréquences d'émission étant séparées d'un écart fréquentiel d'émission choisi,
   - Et en ce qu'il comporte en outre un moyen d'analyse du signal reçu par l'ensemble récepteur (2), le dit moyen d'analyse étant apte à recevoir les fréquences de réception du signal, une fréquence de réception étant la fonction d'une fréquence d'émission affectée de l'effet doppler lié au déplacement du mobile, et à mesurer l'écart fréquentiel de réception séparant les dites fréquences de réception du signal pour calculer la vitesse radiale du mobile selon une fonction dudit écart fréquentiel de réception et de l'écart fréquentiel d'émission.

2. Système selon la revendication 1, **caractérisé en ce que** la balise émetteur (1) est apte à émettre au moins deux signaux simultanément, un premier signal étant émis sur une première fréquence d'émission et le second signal étant émis sur une deuxième fréquence d'émission.

3. Système selon la revendication 1, **caractérisé en ce que** la balise émetteur (1) est apte à émettre un signal sur au moins deux fréquences émises alternativement.

4. Système selon l'une quelconque des revendications précédentes, **caractérisé en ce que** la balise émetteur (1) est embarquée sur le mobile (10) et **en ce que** l'ensemble récepteur (2) est positionné à la position référentielle (3).

5. Système de guidage d'un mobile comprenant un système de mesure de la vitesse radiale du mobile, **caractérisé en ce que** le système de mesure de la vitesse radiale est selon l'une quelconque des revendications 1 à 4, **en ce que** l'ensemble récepteur comporte au moins deux capteurs radiofréquences, et **en ce qu'**il comporte en outre une boule optronique (3) située entre les dits capteurs pour asservir la position du mobile par comparaison de la mesure des vitesses radiales sur les dits capteurs.

6. Système de guidage d'un mobile selon la revendication 5, **caractérisé en ce qu'**il comporte des moyens électroniques de mesure de la vitesse de rotation du mobile par mesure de la polarisation du signal reçu.

7. Système d'aide à l'appontage ou à l'atterrissage pour un aéronef comprenant au moins un système de mesure de la vitesse radiale du mobile, **caractérisé en ce qu'**au moins un système de mesure de la vitesse radiale est selon l'une quelconque des revendications 1 à 4.

8. Système d'aide à l'appontage ou à l'atterrissage pour un aéronef selon la revendication 7, **caractérisé en ce que** l'ensemble récepteur comprend deux capteurs radiofréquences séparés d'une distance choisie.

**Patentansprüche**

1. System zum Messen der Radialgeschwindigkeit eines Mobilgeräts (10) auf einer bestimmten Ziellinie im Verhältnis zu einer Bezugsposition (3), das eine Sendebake (1) eines Signals (4) und eine Bezugs-Empfängereinheit (2), die auf den Empfang des Signals (4) spezialisiert ist, umfasst, wobei:

   - die Sendebake (1) auf einem ersten der Elemente einer Gruppe angeordnet ist, die von dem Mobilgerät (10) und der Bezugsposition (3) gebildet ist,
   - die Empfängereinheit (2) auf einem zweiten der Elemente der Gruppe angeordnet ist,

   **dadurch gekennzeichnet, dass**:

   - die Sendebake (1) imstande ist, ein Signal (4) auf mindestens zwei Sendefrequenzen ($F_1$, $F_2$) zu senden, wobei die Sendefrequenzen um einen gewählten Sendefrequenzabstand getrennt sind,
   - und dass es ferner ein Analysemittel des von der Empfängereinheit (2) empfangenen Signals aufweist, wobei das Analysemittel imstande ist, die Empfangsfrequenzen des Signals zu empfangen, wobei eine Empfangsfrequenz die Funktion einer Sendefrequenz, kombiniert mit dem mit der Verlagerung des Mobilgeräts verbundenen Doppler-Effekt, ist, und den Empfangsfrequenzabstand zu messen, der die Empfangsfrequenzen des Signals trennt, um die Radialgeschwindigkeit des Mobilgeräts gemäß einer Funktion des Empfangsfrequenzabstands und des Sendefrequenzabstands zu berechnen.

2. System nach Anspruch 1, **dadurch gekennzeichnet, dass** die Sendebake (1) imstande ist, mindestens zwei Signale gleichzeitig zu senden, wobei ein erstes Signal auf einer ersten Sendefrequenz und das zweite Signal auf einer zweiten Sendefrequenz gesendet wird.

3. System nach Anspruch 1, **dadurch gekennzeichnet, dass** die Sendebake (1) imstande ist, ein Signal auf mindestens zwei abwechselnd gesendeten Frequenzen zu senden.

4. System nach einem der vorangehenden Ansprüche, **dadurch gekennzeichnet, dass** die Sendebake (1) in dem Mobilgerät (10) eingebaut ist und dass die Empfängereinheit (2) an der Bezugsposition (3) positioniert ist.

5. Lenksystem eines Mobilgeräts, das ein System zum Messen der Radialgeschwindigkeit des Mobilgeräts umfasst, **dadurch gekennzeichnet, dass** das System zum Messen der Radialgeschwindigkeit nach einem der Ansprüche 1 bis 4 ist und dass die Empfängereinheit mindestens zwei Radiofrequenzsensoren aufweist, und dass es ferner eine optronische Kugel (3) aufweist, die sich zwischen den Sensoren befindet, um die Position des Mobilgeräts durch Vergleich der Messung der Radialgeschwindigkeiten auf den Sensoren zu regulieren.

6. Lenksystem eines Mobilgeräts nach Anspruch 5, **dadurch gekennzeichnet, dass** es elektronische Messmittel der Rotationsgeschwindigkeit des Mobilgeräts durch Messung der Polarisierung des empfangenen Signals aufweist.

7. System zur Unterstützung des Aufsetzens oder des Landens eines Luftfahrzeuges, das mindestens ein System zum Messen der Radialgeschwindigkeit des Mobilgeräts umfasst, **dadurch gekennzeichnet, dass** mindestens ein System zum Messen der Radialgeschwindigkeit nach einem der Ansprüche 1 bis 4 ist.

8. System zur Unterstützung des Aufsetzens oder des Landens eines Luftfahrzeuges nach Anspruch 7, **dadurch gekennzeichnet, dass** die Empfängereinheit zwei in einem gewählten Abstand getrennte Radiofrequenzsensoren umfasst.

**Claims**

1. System for measuring the radial speed of the moving body (10) in a line of sight determined with respect to a referential position (3) comprising an emitter assembly (1) for emitting a signal (4) and a referential receiver assembly (2) dedicated to the reception of the said signal (4), **characterized in that**:

   - The emitter assembly (1) is disposed on a first of the elements of a group formed by the moving body (10) and the referential position (3),
   - The receiver assembly (2) is disposed on a second of the elements of the group,

- The emitter assembly (1) is able to emit a signal (4) on at least two emission frequencies ($F_1$, $F_2$), the said emission frequencies being separated by a chosen emission frequency gap,
- And in that it furthermore comprises a means for analyzing the signal received by the receiver assembly (2), the said analyzing means being able to receive the signal reception frequencies, a reception frequency being the function of an emission frequency altered by the Doppler effect related to the displacement of the moving body, and to measure the reception frequency gap separating the said signal reception frequencies so as to calculate the radial speed of the moving body according to a function of the said reception frequency gap and of the emission frequency gap.

2. System according to Claim 1, **characterized in that** the emitter assembly (1) is able to emit at least two signals simultaneously, a first signal being emitted on a first emission frequency and the second signal being emitted on a second emission frequency.

3. System according to Claim 1, **characterized in that** the emitter assembly (1) is able to emit a signal on at least two alternately emitted frequencies.

4. System according to any one of the preceding claims, **characterized in that** the emitter assembly (1) is on board the moving body (10) and **in that** the receiver assembly (2) is positioned at the referential position (3).

5. Guidance system for a moving body comprising a system for measuring the radial speed of the moving body, **characterized in that** the system for measuring the radial speed is according to any one of Claims 1 to 4, **in that** the receiver assembly comprises at least two radiofrequency sensors, and **in that** it furthermore comprises an optronics pod (3) situated between the said sensors so as to servocontrol the position of the moving body by comparing the measurement of the radial speeds on the said sensors.

6. Guidance system for a moving body according to Claim 5, **characterized in that** it comprises electronic means for measuring the rotation speed of the moving body by measuring the polarization of the signal received.

7. System for aiding deck-landing or landing for an aircraft comprising at least one system for measuring the radial speed of the moving body, **characterized in that** at least one system for measuring the radial speed is according to any one of Claims 1 to 4.

8. System for aiding deck-landing or landing for an aircraft according to Claim 7, **characterized in that** the receiver assembly comprises two radiofrequency sensors separated by a chosen distance.

FIG.1

FIG.2

FIG.3

FIG.4

FIG.5

## FIG.6

$A_1*A_{2*} [\cos (\omega_1 + \omega_3) t) + *\cos (\omega_1 - \omega_3) t) ] +$
$A_1*A_{2*} [\cos (\omega_2 + \omega_3) t) + *\cos (\omega_2 - \omega_3) t) ]$

IF

RF

LO

$A_1*\cos(\omega_1 t + \varphi_1) + A_2*\cos (\omega_2 t + \varphi_2)$

$f_3 = A_3*\cos (\omega_3 t + \varphi_3)$

## FIG.7

IF

$f_1$ $f_2$ $f_1$ $f_2$ $f_1$

RF

LO

$f_2$

$f_1 - f_2$
$f_2 - f_1$

## FIG.8

**EP 2 461 166 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 676455 C
- US 3409369 A
- US 4301455 A